(19) Europäisches Patentamt / European Patent Office / Office européen des brevets

(11) **EP 4 712 341 A1**

(12) **EUROPEAN PATENT APPLICATION**

(43) Date of publication:
**18.03.2026 Bulletin 2026/12**

(21) Application number: **24306481.3**

(22) Date of filing: **11.09.2024**

(51) International Patent Classification (IPC):
*H02S 50/00* (2014.01)

(52) Cooperative Patent Classification (CPC):
**H02S 50/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Commissariat à l'Energie Atomique et aux Energies Alternatives**
**75015 Paris (FR)**
• **Université Savoie Mont Blanc**
**73000 Chambéry (FR)**

• **Centre National de la Recherche Scientifique**
**75016 Paris (FR)**

(72) Inventors:
• **LESPINATS, Sylvain**
**38054 GRENOBLE CEDEX 09 (FR)**
• **CARDENAS, Carlos**
**73000 CHAMBERY (FR)**

(74) Representative: **Atout PI Laplace**
**Immeuble Up On**
**25 Boulevard Romain Rolland**
**CS 40072**
**75685 Paris Cedex 14 (FR)**

(54) **METHOD FOR GENERATING ARTIFICIAL INFRARED IMAGES OF A SOLAR PHOTOVOLTAIC PANEL FOR TRAINING A MACHINE LEARNING ALGORITHM TO DETECT FAILURES**

(57) A computer implemented method for generating artificial infrared images of a solar photovoltaic panel comprising several solar cells, the artificial infrared images being intended for use as synthetic training data for a machine learning algorithm trained to detect a failure of the solar photovoltaic panel, each artificial infrared image being labeled with a type of failure, the method comprising the steps of, for each cell:

Setting (202) an initial value of a photovoltaic temperature of the cell,

Executing several iterations of the steps of:

Determining (203) a photovoltaic operational power of the cell from an electro-thermal model of the cell function of the photovoltaic temperature of the cell,

Determining (204) a new value of the photovoltaic temperature of the cell from a heat transfer model of the cell function of the photovoltaic operational power of the cell,

At least a parameter of the electro-thermal model being modified from a corresponding reference parameter determined for a healthy cell to simulate a type of failure,

Stopping (206) the iterations when a predefined convergence criteria is met,

Providing (207,403) an artificial infrared image composed of the photovoltaic temperature of each cells and a label corresponding to the type of failure.

FIG.2

Processed by Luminess, 75001 PARIS (FR)

# EP 4 712 341 A1

## Description

The invention relates to the field of methods for diagnosis of failures of photovoltaic systems using infrared images as basis.

More particularly, the invention relates to a method using a machine learning algorithm to detect failures on a matrix of photovoltaic cells from infrared images of said matrix. The invention also concerns a method for generating synthetic training data, in the form of artificial infrared images, for training the machine learning algorithm.

Currently, a widespread technique to identify faults in large-scale solar photovoltaic plants is thermal imaging. This measurement technique has been applied in the field empirically manually or by using drones. Subsequently, using these images in the field, automatic techniques can be used to identify the existence of anomalies in the operation. A possible solution for automatizing the detection of failure is to use supervised machine learning tools.

In this context, a labeled dataset is a collection of data where each item is assigned a specific label or category, aiding in supervised learning tasks by providing ground truth information for training algorithms. Examples of these labels are: hotspot, diode problems, substring disconnection, module disconnection, Potential Induced Degradation (PID), aging. Deep learning techniques rely on labeled datasets for training supervised algorithms, requiring a high amount of data. However, obtaining such datasets for real-world scenarios poses a significant challenge. To date, the process of labeling the training dataset needs to be performed by an expert analyzing image by image, which made this task unfeasible for larger datasets.

A global objective of the invention is to provide a method for automatically detecting a failure on a solar panel from infrared images. Another objective is to provide a cost effective solution for generating training data for training a machine learning algorithm to assist in the automatic detection of failures.

The proposed invention aims at providing a solution for generating a large amount of training data with no human assistance in order to train a machine learning algorithm to automatically detect failures in a matrix of photovoltaic cells.

To this end, the invention relates to a method for generating synthetic training data in the form of infrared images obtained through the implementation of the combination of an electro-thermal model and a heat transfer model that predicts a photovoltaic temperature for each cell and for different types of failures that are modelled by a change of value of some parameters of the model.

The synthetic infrared images can be computed for different type of failures to constitute a training data base for training a machine learning algorithm to automatically detect failures on new infrared images captured by a thermal camera, for example embedded in a drone.

The different types of failures include shadowing, increased series resistance, diode problems, cracks. The method also enables the generation of images corresponding to a healthy cell.

The topology of the solar photovoltaic system is first determined. For example a solar module is composed of several sub-strings, where each sub-string is composed by $n_s$ solar cells connected in series and protected by one bypass diode.

The electro-thermal parameters for every solar cell and bypass diodes and the heat transfer parameters are then set to initial values.

The synthetic thermal image is computed by executing the model to determine the temperature of each cell under different conditions that correspond to different specific failures that are randomly selected.

The invention relates to a computer implemented method for generating artificial infrared images of a solar photovoltaic panel comprising several solar cells, the artificial infrared images being intended for use as synthetic training data for a machine learning algorithm trained to detect a failure of the solar photovoltaic panel, each artificial infrared image being labeled with a type of failure, the method comprising the steps of, for each cell:

- Setting an initial value of a photovoltaic temperature of the cell,

- Executing several iterations of the steps of:

    i. Determining a photovoltaic operational power of the cell from an electro-thermal model of the cell function of the photovoltaic temperature of the cell,

    ii. Determining a new value of the photovoltaic temperature of the cell from a heat transfer model of the cell function of the photovoltaic operational power of the cell,

- At least a parameter of the electro-thermal model being modified from a corresponding reference parameter determined for a healthy cell to simulate a type of failure,

- Stopping the iterations when a predefined convergence criteria is met,

- Providing an artificial infrared image composed of the photovoltaic temperature of each cells and a label corresponding to the type of failure.

The invention also relates to a computer implemented method for training a machine learning algorithm to detect a failure in a solar photovoltaic panel comprising several solar cells, the method comprising the training of the machine learning algorithm with synthetic labeled training data obtained with the method for generating artificial infrared images according to the invention.

The above and other items, features and advantages of the invention will be better understood by reading the following more particular description of the invention in conjunction with the figures wherein:

Figure 1 shows an example of a solar module structure,

Figure 2 depicts a diagram showing the steps of a method for generating artificial infrared images according to an embodiment of the invention,

Figure 3 depicts an example of an equivalent electrical circuit of a heat transfer model for a solar PV cell,

Figure 4 shows a diagram of a method for generating labeled training data according to an embodiment of the invention,

Figure 5 shows a diagram of a method for detecting failures on a solar photovoltaic panel according to an embodiment of the invention,

Figure 6 shows an example of a labeled training infrared image obtained with the invention,

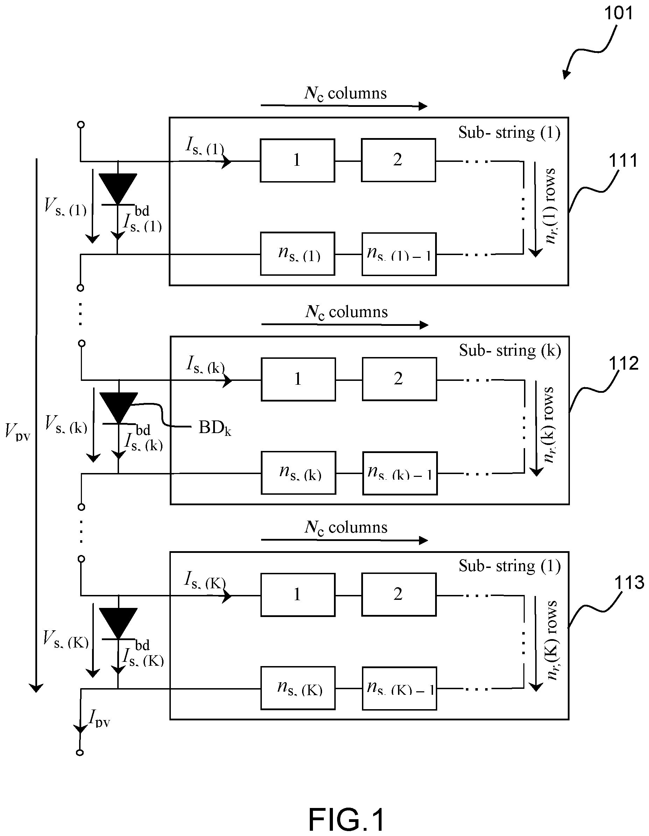

Figure 1 shows the electrical distribution of the elements composing a solar module 101.

A solar module 101 is defined as an electrical power source consisting of $N_s$ solar cells. Usually, the solar cells are connected in series and segmented by K number of sub-strings 111,112,113, where $\{K \in N \mid K > 1\}$. A sub-string is a collection of $n_{s,(k)}$ solar cells $C_k$ connected in series, protected by a bypass diode $BD_k$. Then, the amount of solar cells per sub-string is described by the following set as shown on figure 1:

$$n_s := \left\{ n_{s,(1)}, \ldots, n_{s,(k)}, \ldots, n_{s,(K)} \right\}. \tag{1}$$

Here, the solar cells are arranged by a square array of dimension $N_r \times N_c$ (total amount of rows by total amount of columns). The amount of rows per substring is described by the set:

$$n_r := \left\{ n_{r,(1)}, \ldots, n_{r,(k)}, \ldots, n_{r,(K)} \right\}. \tag{2}$$

From these definitions, the following equalities hold:

$$n_{s,(k)} = N_c \, n_{r,(k)}, \tag{3}$$

$$N_r = \sum_{k=1}^{K} n_{r,(k)}, \tag{4}$$

$$N_s = \sum_{k=1}^{K} n_{s,(k)}. \tag{5}$$

Moreover, the number of solar cells $N_s$ can be computed from the rows and columns as

$$N_s = N_r N_c, \qquad (6)$$

$$N_s = N_c \sum_{k=1}^{K} n_{r,(k)}. \qquad (7)$$

The solar module is subject to an irradiance cell by cell denominated as plane of the array irradiance $E_{poa}$. Also, the temperature of the solar module is represented by a matrix $T_{mod}$ where each element represents the temperature of a single solar cell with magnitude $T_{cell}$.

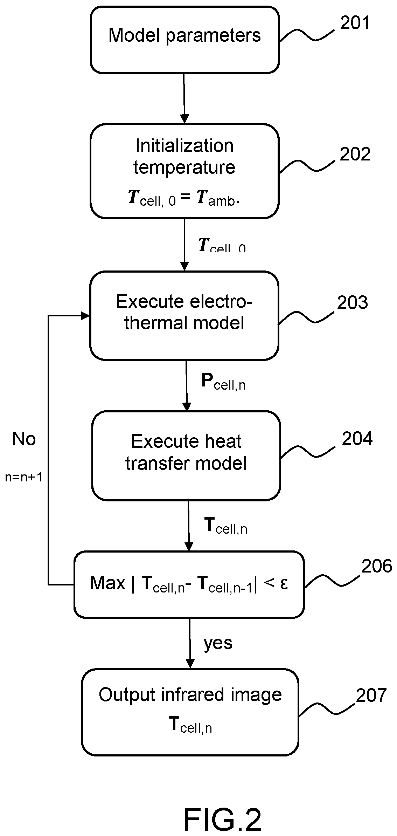

Figure 2 shows a diagram of a method for generating artificial infrared images according to an embodiment of the invention.

A goal of the method is to determine a synthetic infrared image corresponding to a predefined type of failure of at least one cell of an array of cells (solar module).

Each pixel of the synthetic infrared image is a photovoltaic temperature of each cell which is an output of the method.

The method is based on the successive execution of a first electro-thermal model and a second heat transfer model. The next sections describe an example of these two models.

Electro-thermal model

We now describe an example of an electro-thermal model that can be used to implement step 203 of the method of figure 2. This model is given as an example and other models are compatible with the invention as long as they capture the electro-thermal behavior of a solar cell.

The electro-thermal model takes as inputs the irradiance in the plane of the array $E_{poa}$ and the cell temperature $T_{cell}$ and provides as output a cell operational power $P_{cell}$.

The electro-thermal model implicitly relates the photovoltaic current, $I_{pv}$, with the photovoltaic voltage, $V_{pv}$, by using a number of parameters.

In a first embodiment of the invention, only a solar cell model is determined that is applicable for each cell $C_k$ of the solar panel.

The solar cell is the minimum element composing a solar module. The most extended model for describing the electrical behavior of solar cells is the single-diode model (SDM) that is described in detail in reference [1].

Mathematically, the single diode model is expressed as:

$$
\begin{aligned}
I_{ph,(k,n_s)} = I_{o,(k,n_s)} &\left( \exp\left( \frac{q(V_{(k,n_s)} + R_{s,ref,(k,n_s)} I_{s,(k,n_s)})}{n_{ref,(k,n_s)} k_B T_{cell,(k,n_s)}} \right) - 1 \right) + I_{s,(k,n_s)} \\
&+ G_{sh,(k,n_s)} \left( V_{(k,n_s)} + R_{s,ref,(k,n_s)} I_{s,(k,n_s)} \right) \Big( 1 \\
&+ \alpha_{ref,(k,n_s)} \left( 1 - \left( \frac{V_{(k,n_s)} + R_{s,ref,(k,n_s)} I_{s,(k,n_s)}}{V_{br,ref,(k,n_s)}} \right)^{-m_{ref,(k,n_s)}} \right) \Big), \quad (8)
\end{aligned}
$$

**where** $V_{(k,n_s)}$ and $I_{s,(k,n_s)}$ are the electrical variables of the $n_s$ solar cell belonging to the sub-string (k); $I_{ph,(k,n_s)}$ is the photo-generated current; $I_{o,(k,n_s)}$ is the dark saturation current of the diode; $n_{ref,(k,n_s)}$ is the reference non-ideal factor of the diode; $R_{s,ref,(k,n_s)}$ is the reference series resistance; $G_{sh,(k,n_s)}$ is the shunt conductance; $\alpha_{ref,(k,n_s)}$ is the reference fraction of ohmic current involved in the avalanche breakdown; $m_{ref,(k,n_s)}$ is the reference avalanche breakdown exponent and $V_{br,ref,(k,n_s)}$ is the reference breakdown voltage; $T_{cell(k,n_s)}$ is the temperature of the solar cell, kB is the Boltzmann constant and q represents the elementary charge of the electron.

The parameter $I_{ph,,(k,n_s)}$ is expressed as

$$I_{\mathrm{ph},(k,n_s)} = \frac{E_{\mathrm{poa}(k,n_s)}}{E_{\mathrm{poa,ref}(k,n_s)}} \left( I_{\mathrm{ph,ref},(k,n_s)} + \alpha_{\mathrm{sc,ref},(k,n_s)} \left( T_{\mathrm{cell},(k,n_s)} - T_{\mathrm{cell,ref}(k,n_s)} \right) \right),$$

$$(9)$$

where $E_{\mathrm{poa,ref}(k,ns)}$ is the reference plane of array irradiance; $T_{\mathrm{cell,ref}(k,ns)}$ is the reference cell temperature; $I_{\mathrm{ph,ref}(k,ns)}$ is the reference photo-generated current;

and $\alpha_{\mathrm{sc\,ref}(k,ns)}$ is the short-circuit current temperature coefficient.

The reference parameters are determined for a reference condition describing the state of health of the solar cell, for example a healthy cell.

The dark saturation current $I_{\mathrm{o}(k,ns)}$ of equation (8) is expressed as

$$I_{\mathrm{o},(k,n_s)} = I_{\mathrm{o,ref},(k,n_s)} \left( \frac{T_{\mathrm{cell},(k,n_s)}}{T_{\mathrm{cell,ref}(k,n_s)}} \right)^3 \exp\left( \frac{q}{k_{\mathrm{B}}n} \left( \frac{E_{\mathrm{gap}}(T_{\mathrm{cell,ref}(k,n_s)})}{T_{\mathrm{cell,ref}(k,n_s)}} - \frac{E_{\mathrm{gap}}(T_{\mathrm{cell},(k,n_s)})}{T_{\mathrm{cell},(k,n_s)}} \right) \right),$$

$$(10)$$

$$E_{\mathrm{gap}} = 1.166 - 0.473 \frac{T^2_{\mathrm{cell},(k,n_s)}}{T_{\mathrm{cell},(k,n_s)} + 636},$$

$$(11)$$

where $I_{\mathrm{o,ref}(k,ns)}$ is the reference dark saturation current of the diode, $E_{\mathrm{gap}}$ is the bandgap energy which is function of the temperature. The parameters defining $E_{\mathrm{gap}}$ are presented for the Silicon material in reference [2].

The shunt conductance is defined as:

$$G_{\mathrm{sh},(k,n_s)} = \frac{G_{\mathrm{sh,ref},(k,n_s)}}{E_{\mathrm{poa,ref}(k,n_s)}} E_{\mathrm{poa}(k,n_s)},$$

$$(12)$$

where $G_{\mathrm{sn,ref}(k,ns)}$ is the reference shunt conductance.

The remaining five parameters, $n_{\mathrm{ref}(k,ns)}$, $R_{\mathrm{s,ref}(k,ns)}$, $\alpha_{\mathrm{ref}(k,ns)}$, $m_{\mathrm{ref}(k,ns)}$, and $V_{\mathrm{br,ref}(k,ns)}$, do not depend on $E_{\mathrm{poa}(k,ns)}$ and $T_{\mathrm{cell}(k,ns)}$.

All reference parameters of the solar cell depicted above are extracted from healthy data (current-voltage curve). The reference parameters will depend, in particular but not exclusively, on the technology of the solar cell, size of the solar cell (rated power), and construction aspects. Moreover, the reference parameters also depend on the reference environmental conditions which, in general, are assumed as an irradiance of 1 000Wm$^{-2}$ and a cell temperature of 25 °C.

According to an embodiment of the invention, the electro-thermal model of the solar panel also takes account of a bypass protection diode $BD_k$ model.

The bypass diode can be modeled following the principles explained in reference [3] as a function of the current bypass diode $I_{\mathrm{bd},(k)}$ related to the tension bypass diode $V_{\mathrm{s},(k)}$:

$$I_{\mathrm{bd},(k)} = I_{\mathrm{o,bd},(k)} \left( \exp\left( \frac{q(V_{\mathrm{s},(k)} - R_{\mathrm{s,bd},(k)} I^{\mathrm{bd}}_{\mathrm{s},(k)})}{n_{\mathrm{bd},(k)} k_{\mathrm{B}} T_{\mathrm{bd},(k)}} \right) - 1 \right),$$

$$(13)$$

where $I_{\mathrm{o,bd},(k)}$ represents the dark saturation current of the diode; $n_{\mathrm{bd},(k)}$ the ideality factor of the diode; and $T_{\mathrm{bd},(k)}$ is the bypass diode temperature. In addition, the series resistance $R_{\mathrm{s,bd},(k)}$ is incorporated into this formulation to describe more realistic scenarios.

Typically, from the datasheet two operations points (voltage/current) at 298.15 K° are provided: (i) forward point ($V_{\mathrm{fwd}}$, $I_{\mathrm{fwd}}$) and (ii) reverse point ($V_{\mathrm{rev}}$, $I_{\mathrm{rev}}$). Therefore, from this data, it is possible to estimate two parameters of the bypass diode model (the diode's parameters $I_{\mathrm{bd},(k)}$ and $n_{\mathrm{bd},(k)}$ for example). In some cases, there are more than two points available, thus a much larger amount of parameters can be estimated.

By using the model presented in equation (13), different operating scenarios can be addressed. For instance, the disconnection of the diode can be understood as the electrical condition when the current $I_{bd,(k)}$ tends to zero. This condition can be replicated if $R_{s,bd,(k)}$ tends to an infinite value.

We now describe how the operational power $P_{cell,(k, ns)}$ is determined from the solar cell model and the bypass diode model defined above.

The computation of the electrical response of a solar cell is done by estimating the current $I_{pv}$ from the voltage, $V_{pv}$ or vice versa.

The solar module is composed by K numbers of sub-strings connected in series, where every sub-string is protected by a bypass diode as shown on figure 1.

Then, we define an unknown voltage vector $V_j$, of dimension $(N_s + K)$ consisting, in all voltages of solar cells and bypass diodes.

$$V_j := \left\{ \underbrace{V_{j,(1,1)}, \cdots, V_{j,(1, n_{s,(1)})}, V^{bd}_{j,(1)}}_{\text{sub-string 1}}, \cdots, \underbrace{V_{j,(k,1)}, \cdots, V_{j,(k, n_{s,(k)})}, V^{bd}_{j,(k)}}_{\text{sub-string } k}, \cdots, \right.$$

$$\left. \underbrace{V_{j,(1,1)}, \cdots, V_{j,(k, n_{s,(K)})}, V^{bd}_{j,(K)}}_{\text{sub-string K}} \right\}. \quad (14)$$

Here, $V_{j,(k, ns,(k))}$ represents the internal voltage of the $n_{s,(k)}$-th solar cell from the k-th sub-string, while $V^{bd}_{j,(k)}$ represents the internal voltage of the k-th bypass diode.

$$V_{j,(k, n_{s,(k)})} = V_{(k n_s)} + R_{s,(k, n_s)} I_{s,(k, n_s)} \quad (15)$$

$$V^{bd}_{j,(k)} = V_{s,k} + R_{s,(k, n_s)} I^{bd}_{s,(k)} \quad (16)$$

$R_{s,(k,ns)}$ is the series resistance of a solar cell

The photovoltaic current can be computed if $V_{pv}$ is known. For this, three sets of equations must be considered: equations coming from the k-th sub-string, $F_{c,s(k)}$; equations coming from the transition of the k-th sub-string to the (k+1)-th sub-string, $F_{c, s(k) \to (k+1)}$; and equation describing the Kirchoffs Voltage Law (KVL) on the bypass diodes, $F_{c,KVL}$. The equations $F_{c, s(k)}$ are mathematically expressed as

$$\left( \sum_{n_s=1}^{n_{s,(k)}} V_{j,(k, n_s)} \right) + V^{bd}_{j,(1)} - R^{eq}_{s,(k)} I_{s,(k, n_{s,(k)})} + R^{bd}_{s,(k)} I^{bd}_{s,(k)} = 0, \quad (17)$$

$$I_{s,(k, 1)} - I_{s,(k, 2)} = 0, \quad (18)$$

$$\vdots \quad (19)$$

$$I_{s,(k, n_{s,(k)}-1)} - I_{s,(k, n_{s,(k)})} = 0, \quad (20)$$

where the equivalent series resistance of the k-th sub-string, $R^{eq}_{s,(k)}$, represents the sum of every individual solar cell composing the k-th substring. The equivalent series resistance is computed as

$$R_{s,(k)}^{eq} = \sum_{n_s=1}^{n_{s,(k)}} R_{s,(n_s)}. \qquad (21)$$

Here, it is represented the Kirchoffs Current Law KCL connecting two consecutive solar cells ($n_{s,(k)}$ - 1 equations) and the KVL among the electrical elements composing the k-th substring (1 equation). Therefore, the set of equations $F_{c,\,s(k)}$ has a total amount of $n_{s,\,(k)}$ elements. The second set of equations, $F_{c,\,s(k)\rightarrow(k+1)}$, corresponds to the transition between two consecutive sub-strings, and it is expressed one single equation:

$$I_{s,\left(k,n_{s,(k)}\right)} + I_{s,(k)}^{bd} - I_{s,(k+1,k)} - I_{s,(k+1)}^{bd} = 0. \qquad (22)$$

Finally, the KVL around the bypass diodes $F_{c,KVL}$ is

$$\left( \sum_{k=1}^{K} V_{j,(k)}^{bd} + R_{s,(k)}^{bd} I_{s,(k)}^{bd} \right) + V_{pv} = 0. \qquad (23)$$

The set of equations $F_{c,\,s(k)}$, $F_{c,\,s(k)\rightarrow(k+1)}$, and $F_{c,\,KVL}$ is summarized as, Fc,

$$F_c = \left\{ F_{c,s_{(1)}},\, F_{c,s_{(1)\rightarrow(2)}},\, \dots F_{c,s_{(k)}},\, F_{c,s_{(k)\rightarrow(k+1)}},\, \dots F_{c,s_{(K)}},\, F_{c,KVL} \right\}. \qquad (24)$$

This set of equations present an amount of $N_s$ + K elements. The resolution can be done applying a resolution method such as the least-squares. Then, from the current and voltage, the maximum power can be estimated as

$$P_{mp} = \max\left\{ V_{pv} I_{pv} \right\}. \qquad (25)$$

Then, the power of every solar cell $P_{cell,(k,\,ns)}$ is numerically estimated using the computed interval voltages $V_j$. More precisely, the power $P_{cell,(k,\,ns)}$ is determined as $P_{cell,(k,\,ns)} = (V_{j,(k,ns)}$.-Rs,(k,ns)*ls,(k,ns))*ls,(k,ns) Subsequently, the maximum power of the solar cell can be numerically estimated as max{$P_{cell,(k,\,ns)}$}.

<u>Heat transfer model</u>

We now describe an example of a heat transfer model that can be used to implement step 204 of the method of figure 2. As for the electro-thermal model, the heat transfer model is given as an example and other models are compatible with the invention as long as they capture the heat transfer behavior of a solar cell.

The proposed heat transfer model describes the thermal interaction between the solar cell and its surroundings through three mechanisms: conduction, convection, and radiation. Conduction refers to heat transfer through physical contact, while convection occurs through the macroscopic movement of a fluid. Radiation involves heat transfer via the emission or absorption of microwaves, infrared radiation, visible light, or other forms of electromagnetic radiation.

For determining the heat transfer equations, let us assume that the solar cell is a single solid element where all material properties are temperature independent and homogeneously distributed. The information from the glass, ethylene vinyl acetate (EVA) film, solar cell, and back sheet layers is then concentrated in an equivalent element with a temperature $T_{cell,(k,\,ns)}$. This equivalent element is not in physical contact with any other material, hence conduction is not considered.

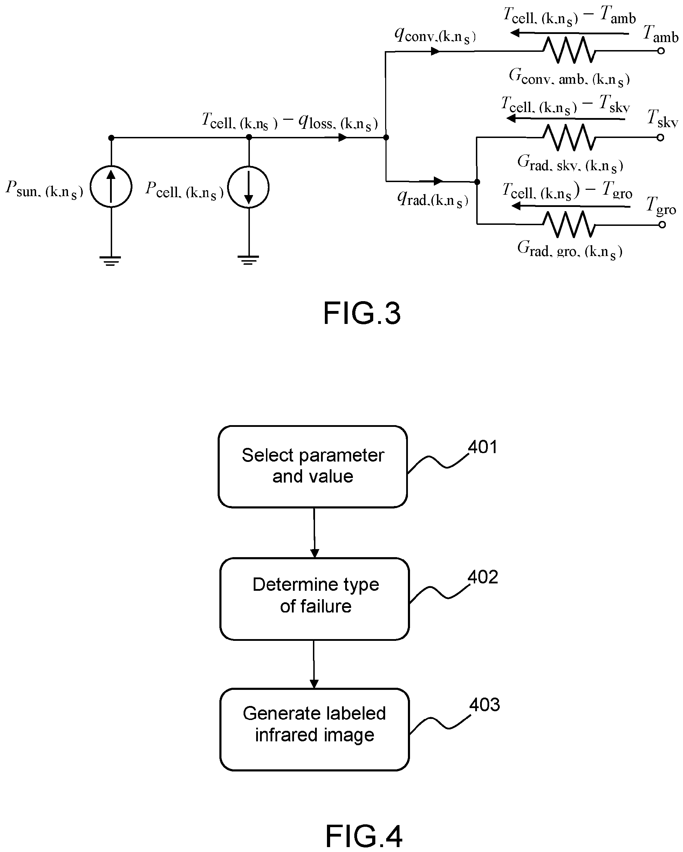

Under this heat transfer scheme, figure 3 depicts the equivalent electrical diagram of the heat transfer model. A heat transfer model can be effectively described using an electrical circuit analogy. In this analogy, temperatures are analogous to voltages at nodes within the circuit. The power sources $P_{sun,\,(k,\,ns)}$ and $P_{cell,\,(k,\,ns)}$ are treated as current sources. Thermal conductances are represented as electrical conductances G. Therefore, within this electrical circuit analogy, Kirchhoff's laws of current and voltage are satisfied, simplifying the analysis of the heat transfer processes.

In the diagram of figure 3, $P_{sun,\,(k,\,ns)}$ represents the incoming energy flux from the sun; $P_{cell,\,(k,\,ns)}$ indicates the operational electrical power (output energy flux); and $q_{loss,\,(k,\,ns)}$ represents the total heat transfer losses. These losses are categorized into convective exchanges, $q_{conv,(k,\,ns)}$, and radiative exchanges, $q_{rad,(k,\,ns)}$. Within this framework, convective exchanges occur exclusively with the ambient temperature $T_{amb}$ through the convective conductance, $G_{conv,\,amb}$. On the other hand, radiative exchange involves interactions with the sky at temperature $T_{sky}$ and the ground at temperature $T_{gro}$, characterized by radiative conductances $G_{rad, sky}$ and $G_{rad, gro}$.

From the thermal circuit shown in figure 3, the energy balance equation is expressed as

$$P_{sun, (k, n_s)} = P_{cell, (k, n_s)} + q_{loss, (k, n_s)}, \qquad (26)$$

where the energy accumulated by unit of time by the cell is expressed by the heat capacity term and the derivative of $T_{cell, (k, ns)}$ with respect to time, t. In this expression, the information for the temperatures is summarized in the cell temperature matrix $T_{cell}$. The following sections will detail the energy flux, heat capacity, and heat losses.

The input energy flux $P_{sun, (k, ns)}$ is understood as the effective incoming solar radiation reaching the front surface as explained in reference [4]. Mathematically, the energy flux can be computed as

$$P_{sun, (k, n_s)} = A_{cell, (k, n_s)} \, \alpha_{cell, (k, n_s)} \, E_{poa (k, n_s)}, \qquad (27)$$

where $A_{cell, (k, ns)}$ represents the solar cell area; $\alpha_{cell, (k, ns)}$ is the combined coefficient representing the transmittance and the absorbance effects. It must be noticed that for a solar module discretized cell by cell, the input energy flux is represented in the matrix form denoted in bold face, $P_{sun}$, having $N_s$ elements.

The output flux corresponds to the electrical power of the solar cell $P_{cell,(k,ns)}$, computed by using the electrical model (step 203) describing the non-linear behavior in the reverse biased voltage. As for the input energy flux, the output power matrix $P_{cell, (k, ns)}$ summarizes all the electrical power discretized cell by cell.

The heat losses represent the thermal interactions between the solar cell and its environment. In the analyzed case, there are three main interactions involving the solar cell: interaction with the ambient (convective loss), interaction with the sky (radiative loss), and interaction with the ground (radiative loss).

The heat losses are mathematically expressed as

$$q_{loss, (k, n_s)} = \underbrace{G_{conv, amb, (k, n_s)}(T_{cell, (k, n_s)} - T_{amb})}_{q_{conv, (k, n_s)}}$$

$$+ \underbrace{G_{rad, sky, (k, n_s)}(T_{cell, (k, n_s)} - T_{sky}) + G_{rad, gro, (k, n_s)}(T_{cell, (k, n_s)} - T_{gro})}_{q_{rad, (k, n_s)}}. \qquad (28)$$

The next sections detail the mathematical expression of all three conductances.

The sky temperature can be defined as

$$T_{sky} = 5.52 \times 10^{-2} \, T_{amb}^{3/2}. \qquad (29)$$

The ground temperature can be taken as equal to the ambient temperature :

$$T_{gro} = T_{amb} \qquad (30)$$

The convective conductance is mathematically expressed as

$$G_{conv, amb, (k, n_s)} = A_{cell, (k, n_s)} \, h_{(k, n_s)}, \qquad (31)$$

where $h_{(k, ns)}$ represents the convection heat transfer coefficient. In turn, the heat transfer coefficient is sometimes computed as the free convective coefficient, $h_{free, (k, ns)}$, the forced convective coefficient, $h_{forced, (k, ns)}$, or the sum of both coefficients $h_{free, (k, ns)} + h_{forced, (k, ns)}$ as explained in reference [5].

The free convective coefficient can be modeled as:

$$h_{\text{free},(k,n_s)} = 1.31(T_{\text{cell},(k,n_s)} - T_{\text{amb}})^{1/3},\qquad(32)$$

where the temperatures $T_{\text{cell},(k,n_s)}$ and $T_{\text{amb}}$ are measured in kelvin, K.

On the other hand, the forced convective coefficient can be expressed as:

$$h_{\text{forced},(k,n_s)} = 5.67 + 3.86\,w,\qquad(33)$$

where w represents the wind speed measured in m.s$^{-1}$.

The radiative losses can be segmented into sky and ground exchanges, explained by the black body radiation. Then, the sky conductance, $G_{\text{rad, sky, (k, ns)}}$, and the ground conductance, $G_{\text{rad, gro, (k, ns)}}$, indicated in figure 3 can be expressed as:

$$G_{\text{rad,sky},(k,n_s)} = A_{\text{cell},(k,n_s)}\,\sigma\,\big(\varepsilon_{\text{front},(k,n_s)}\,F_{\text{front}\to\text{sky}}$$
$$+\varepsilon_{\text{back},(k,n_s)}\,F_{\text{back}\to\text{sky}}\big)\,\big(T_{\text{cell},(k,n_s)} + T_{\text{sky}}\big)\,\Big(T^2_{\text{cell},(k,n_s)} + T^2_{\text{sky}}\Big),\quad(34)$$

$$G_{\text{rad,gro},(k,n_s)} = A_{\text{cell},(k,n_s)}\,\sigma\,\big(\varepsilon_{\text{front},(k,n_s)}\,F_{\text{front}\to\text{gro}}$$
$$+\varepsilon_{\text{back},(k,n_s)}\,F_{\text{back}\to\text{gro}}\big)\,\big(T_{\text{cell},(k,n_s)} + T_{\text{gro}}\big)\,\Big(T^2_{\text{cell},(k,n_s)} + T^2_{\text{gro}}\Big),\quad(35)$$

where $\sigma$ is the Stephan-Boltzmann constant; $\varepsilon_{\text{front},(k,ns)}$ represents the front surface emissivity; $\varepsilon_{\text{back},(k,ns)}$ represents the back surface emissivity; and F indicates the view factor for the front and back surfaces with respect to the sky and ground. The viewfactors depend on the tilt angle of the photovoltaic module, β.

If the solar module is mounted with $\beta$ in the range [0, $\pi$], then the view factors are computed as follows

$$F_{\text{front}\to\text{sky}} = \frac{1}{2}\left(1 + \cos\left(\beta\right)\right),\qquad(36)$$

$$F_{\text{back}\to\text{sky}} = \frac{1}{2}\left(1 + \cos\left(\pi - \beta\right)\right),\qquad(37)$$

$$F_{\text{front}\to\text{gro}} = \frac{1}{2}\left(1 - \cos\left(\beta\right)\right),\qquad(38)$$

$$F_{\text{back}\to\text{gro}} = \frac{1}{2}\left(1 - \cos\left(\pi - \beta\right)\right).\qquad(39)$$

The front and back emissivities are usually taken as 0.85 and 0.9 respectively.

For modeling purposes, there are several hypotheses coming from the electrical and the thermal model. On one side, from the electrical side we have:

- The parameters $\{n_{(k,ns)}, R_{s,(k,ns)}, \alpha_{(k,ns)}, V_{\text{br}(k,ns)}, m_{(k,ns)}\}$ are independent of the temperature.
- The temperature of the bypass diode remains equals to the ambient temperature.

On the other hand, from the heat transfer side:

- Two adjacent solar cells are thermal independence.
- The layers composing the solar module share the same temperature.
- The bypass diode temperature does not impact the temperature of any solar cell.
- The ambient temperature is considered constant and homogeneously distributed on the solar module surface.

Under these assumptions, equation (26) can be rewritten as

$$0 = A_{\text{cell, (k, n}_s)} \alpha_{\text{cell, (k, n}_s)} E_{\text{poa (k, n}_s)}$$

$$+ \frac{5.52^4 \times 10^{-8} A_{\text{cell, (k, n}_s)} \sigma}{2} \left( \varepsilon_{\text{front, (k, n}_s)} (1 + \cos(\beta)) + \varepsilon_{\text{back, (k, n}_s)} (1 + \cos(\pi - \beta)) \right) T_{\text{amb}}^6$$

$$+ \frac{A_{\text{cell, (k, n}_s)} \sigma}{2} \left( \varepsilon_{\text{front, (k, n}_s)} (1 - \cos(\beta)) + \varepsilon_{\text{back, (k, n}_s)} (1 - \cos(\pi - \beta)) \right) T_{\text{amb}}^4$$

$$+ A_{\text{cell, (k, n}_s)} h_{(k, n}_s)} T_{\text{amb}} - A_{\text{cell, (k, n}_s)} \sigma \left( \varepsilon_{\text{front, (k, n}_s)} + \varepsilon_{\text{back, (k, n}_s)} \right) T_{\text{cell}}^4$$

$$- A_{\text{cell, (k, n}_s)} h_{(k, n}_s)} T_{\text{cell}} - P_{\text{cell, (k, n}_s)}. \quad (40)$$

Since the solar cells are thermally isolated from each other, this equation can be solved independently for every solar cell $N_s$. Then, the matrix $\boldsymbol{T}_{\text{cell}}$ is determined.

To compute the output cell temperature, the method of figure 3 is implemented The algorithm takes inputs from two segments: (i) the electrical side and (ii) the heat transfer side.

The electrical parameters should correspond to the solar module topology, including the number of sub-strings K, number of columns Nc, and number of rows per sub-string $\boldsymbol{n}_r$.

Additionally, parameters for each solar cell, must be provided. Furthermore, the cell area $A_{\text{cell, (k, ns)}}$ per solar cell and the irradiance on the plane of the array $E_{\text{poa (k, ns)}}$ must also be specified for accurate computation of thermal responses.

On the other hand, the set of parameters corresponding to the heat transfer side are fragmented into two sub-sets. Firstly there are optical parameters, i.e., the absorption coefficient $\alpha_{\text{cell, (k, ns)}}$, the front emissivity $\varepsilon_{\text{front, (k, ns)}}$, the back emissivity $\varepsilon_{\text{back, (k, ns)}}$, and the tilt angle $\beta$. Secondly, the thermal parameters correspond to the ambient temperature $T_{\text{amb}}$, and the convective coefficient $h_{(k,ns)}$.

Returning to figure 3, more details can be given on how to determine matrices $T_{\text{cell, n}}$ and $P_{\text{cell, n}}$ in view of the detailed description of examples of electro-thermal and heat transfer model.

At step 201, the method receives as inputs model parameters. More precisely, the input parameters are (bold letters refer to matrices of values corresponding to the matrix of cells):

- Solar cells parameters: $\boldsymbol{I}_{\text{ph, ref}}$, $\boldsymbol{I}_{\text{o, ref}}$, $\boldsymbol{n}_{\text{ref}}$, $\boldsymbol{R}_{\text{s, ref}}$, $\boldsymbol{G}_{\text{sh, ref}}$, $\boldsymbol{V}_{\text{br, ref}}$, $\alpha_{\text{ref}}$, $\boldsymbol{m}_{\text{ref}}$, $\alpha_{\text{sc, ref}}$ that are used in equations (8) to (12),

- Bypass diode parameters: $\boldsymbol{I}_{\text{bd}}$, $I_{\text{o}}$, $\boldsymbol{n}_{\text{bd}}$, $\boldsymbol{R}_{\text{s}}$ (used in equation (13)).

- Operational parameters: $\boldsymbol{E}_{\text{poa}}$, $\boldsymbol{E}_{\text{poa, ref}}$, $T_{\text{cell, ref}}$, $\boldsymbol{T}_{\text{bd}}$ (used in equations (9) to (13) and (40)).

- Heat transfer parameters: $T_{\text{amb}}$, $\beta$, (k, ns), $\varepsilon_{\text{front, (k, ns)}}$, $\varepsilon_{\text{back, (k, ns)}}$, $\alpha_{\text{cell}}$, $\boldsymbol{A}_{\text{cell}}$ (used in equation (40)).

- Tolerance for stopping the iterations loop $\varepsilon$ (step 206)

At step 202, the matrix of temperatures is initialized, for examples to the ambient temperatures: $T_{\text{cell, 0}} = \boldsymbol{T}_{\text{amb}}$.

Next steps 203 to 206 are iterated.

At step 203 (iteration n), the matrix $P_{\text{cell, n}}$ of photovoltaic operation power is calculated by implementing the electro-thermal model describes above. In more details, first the operational electrical parameters matrices $\boldsymbol{I}_{\text{ph, n}}$, $\boldsymbol{I}_{\text{o, n}}$, $\boldsymbol{G}_{\text{sh, n}}$ are computed according to equations (9) to (12).

Then, the matrix $P_{\text{cell, n}}$ is determined by solving equations (14) to (25).

At step 204, the matrix of photovoltaic temperatures of all cells $T_{\text{cell, n}}$ is computed given $P_{\text{cell, n}}$ by solving equation (40).

At step 206, we compare the maximum value of the matrix $| T_{\text{cell,n}} - T_{\text{cell,n-1}} |$ with the threshold $\varepsilon$. Steps 203 to 206 are iterated until said maximum value is under the threshold.

At step 207, the infrared image is outputed as the matrix $T_{\text{cell,n}}$. Each pixel of the image is a corresponding temperature of a cell.

The spatial resolution of the resulted infrared image can be adapted with image processing techniques such as interpolations to provide an image at a given resolution that is different from the number of cells (e.g. several pixels for each cell).

The method of figure 2 can be used to generate both infrared images corresponding to a healthy solar module and solar modules impacted by different types of failures.

Each generated infrared images is labeled with a class of failure including a class "healthy" for solar modules having no failures.

Different types of failures can be simulated by modifying specific parameters of the electro-thermal model.

For example, a first type of failure corresponds to an elevated leakage current in the junction of the solar cell. To simulate this type of failure, the value of the shunt conductance $G_{sh, (k, ns)}$ is taken equal to a value in the range $]0; G_{sh,ref, (k, ns)}[$ instead of using equation (12) that gives the value of the shunt conductance from the irradiance value (input value) $E_{poa,(k,ns)}$, that is applicable for a healthy module. Only some of all the values of $G_{sh, (k, ns)}$, can be modified to simulate an elevage leakage current for one or several solar cells. The solar cells impacted by this failure inside the solar module can be chosen randomly for each generated infrared image. A value of irradiance below the reference value is typically related to a shaded solar cell.

Another type of failure is a high resistance in the electrical contacts on the solar cell. To simulate this type of failure, the value of the series resistance $R_{s, (k, ns)}$ is chosen strictly above the reference series resistance value $R_{s, ref, (k, ns)}$. Indeed, the ideal value (for a healthy cell) of $R_{s, (k, ns)}$ is zero. As for, the shunt conductance value, the solar cells impacted by this failure inside the solar module can be chosen randomly for each generated infrared image. A high value of the series resistance is typically related to a connection problem.

Another type of failure is impurities on a solar cell. For silicon, the usual value of the non-ideal factor of the diode $n_{(k, ns)}$ is in the range 1 to 2. To simulate impurities on a solar cell, the value of the non-ideal factor of the diode $n_{(k, ns)}$ is taken outside of this range, e.g. below 1 or above 2. As for, the shunt conductance value, the solar cells impacted by this failure inside the solar module can be chosen randomly for each generated infrared image

Another type of failure is related to the irradiance on the plane of the array of the solar cell $E_{poa,(k, ns)}$). Even if this parameter is part of the operational condition, it can cause high temperatures if the irradiance on the solar module is asymmetric. Therefore, asymmetries on the matrix $E_{poa}$ can cause imbalances on the matrix $T_{cell}$. Then, to simulate a rise of temperature on the solar module, the values of the matrix $E_{poa}$ are modified so that the matrix $E_{poa}$ is asymmetric. This type of failure can be related to shading of cells.

Another type of failure is a disconnection of the bypass diode which can be simulated by increasing the value of the resistance of the bypass diode $R_{s, bd, (k)}$. The sub-string impacted by this failure can be chosen randomly for each generated infrared image. This is typically a case of defective diode.

The definition of "failure" is based on a set of reference parameters. Failures in electrical parameters are highly dependent on operational conditions, such as $E_{poa}$ and $T_{cell}$. Additionally, the technology of the solar cell (policristalline silicon, monocristalline silicon, Heterojunction, Perovskyte, etc) affects the "standard" values.

To address the problem of generating faults, a solution is to deviate the reference parameters in order to simulate "synthetic failures." These deviated parameters can be present on one or several solar cells. Also, deviations on the irradiance $E_{poa (k, ns)}$ can be incorporated.

The invention is not limited to the examples of types of failures given above. Other types of failures can be simulated by modifying other parameters of the models without departing from the scope of the invention.

Each synthetic infrared image is labeled with a type of failure according to the parameter that is modified from its reference value.

For example, each parameter can be take equal to its reference value multiplied by a coefficient having a value that characterized the importance of the failure, a value of 1 corresponding to a healthy cell.

This way, a large number of synthetic labeled infrared images can be generated to cover different types of failures with different intensities of the failure.

Figure 4 shows a diagram of a method for generating labeled training data according to an embodiment of the invention.

The method starts at step 401 in which at least one parameter of the electro-thermal model is chosen and a corresponding value of the parameter is chosen for at least one cell. The type, number, values of parameters and the selected cells can be chosen randomly.

At step 402, a corresponding type of failure is generated

At step 403, the method of figure 2 is executed to generate a synthetic infrared image from the parameters initialized at step 401. The type of failure generated at step 402 is used to label the infrared image to obtain a labeled image that will serve as training data.

The steps of figure 4 can be iterated a large number of times to generate large datasets.

The training data step is then used to train a supervised machine learning algorithm to automatically map each input infrared image to a type of failure corresponding to the labels.

The supervised machine learning algorithm is, for example, a neural network or any other supervised algorithm that can be trained from labeled data to classify the data according to categories corresponding to types of failures.

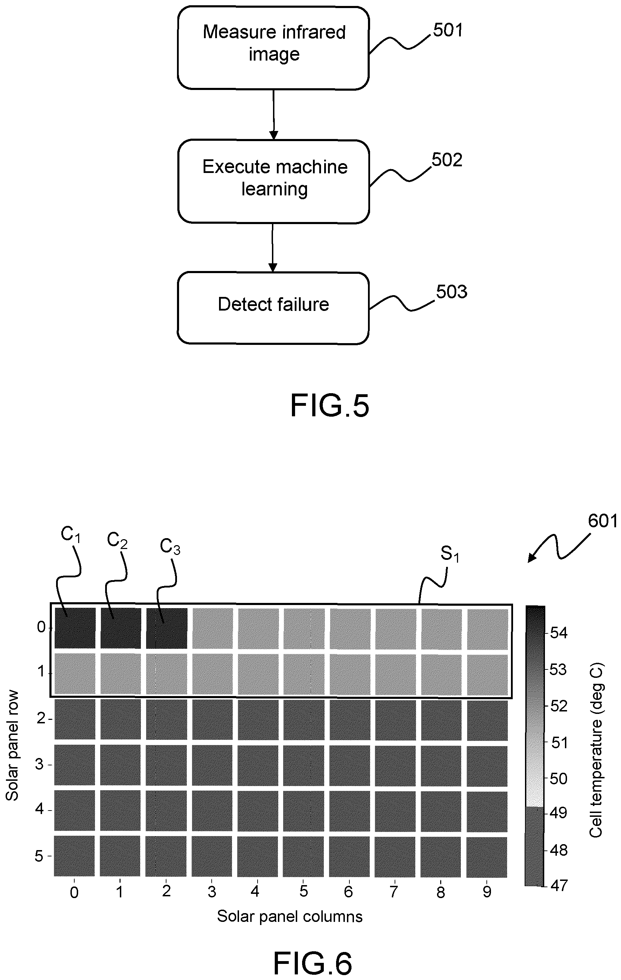

Once the machine learning algorithm is trained, it can be used to detect failures from measured infrared images as explained on figure 5.

Figure 5 shows a diagram of a method for detecting failures on a solar photovoltaic module according to an embodiment of the invention.

The method starts at step 501 by measuring an infrared image of a solar panel, for example with a thermal camera that can be embedded in a drone or by any other specific device.

The infrared image is provided in input of the trained machine learning algorithm at step 502. The infrared image is simply converted from the matrix of temperatures to depict the spatial distribution of temperature differences over the matrix of cells.

A step 503, the output of the algorithm provides a type of failure that includes the category "healthy" corresponding to no failure at all.

Figure 6 shows an example of a synthetic infrared image 601 obtained with the invention. This example simulates a shading of three solar cells $C_1, C_2, C_3$ by decreasing the reference irradiance value by a factor 2. It can be seen on figure 6 that the temperatures of the shaded solar cells increase. Also in this case, the bypass diode of the substring $S_1$ comprising the two first rows of cells is activated, therefore the whole first substring becomes hotter than the other two substrings.

The image 601 is typically labeled with a failure type of shading of cells $C_1, C_2, C_3$.

The present invention may be a system, a method, and/or a computer program product. The computer program product may include a computer-readable storage medium (or media) having computer-readable program instructions thereon for causing a processor to carry out aspects of the present invention. The computer-readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CDROM), a digital versatile disk (DVD), a memory stick, a floppy disk, a mechanically encoded device such as punch cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire. Computer-readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer-readable program instructions from the network and forwards the computer-readable program instructions for storage in a computer-readable storage medium within the respective computing/processing device. Computer-readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer-readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the present invention. Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer-readable program instructions. These computer-readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart and/or block diagram block or blocks. The computer-readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

References

[1] J. Bishop, "Computer simulation of the effects of electrical mismatches in photovoltaic cell interconnection circuits," Solar Cells,vol. 25, no. 1, pp. 73-89, Oct. 1988, mAG ID: 1967163241 S2ID: 4b2b8f66d0f7dc9bad5f12-d1719a590f1b63603d.

[2] B. Van Zeghbroeck, "Principles of Semiconductor Devices," 2004.

[3] W. Shockley, "The theory of p-n junctions in semiconductors and p-n junction transistors," The Bell System Technical Journal, vol. 28, no. 3, pp. 435-489, Jul. 1949, conference Name: The Bell System Technical Journal.

[4] D. T. Lobera and S. Valkealahti, "Dynamic thermal model of solar PV systems under varying climatic conditions," Solar Energy, vol. 93, pp. 183-194, Jul. 2013.

[5] G. Notton, C. Cristofari, M. Mattei, and P. Poggi, "Modelling of a doubleglass photovoltaic module using finite differences," Applied Thermal Engineering, vol. 25, no. 17-18, pp. 2854-2877, Dec. 2005.

**Claims**

1. A computer implemented method for generating artificial infrared images of a solar photovoltaic panel comprising several solar cells, the artificial infrared images being intended for use as synthetic training data for a machine learning algorithm trained to detect a failure of the solar photovoltaic panel, each artificial infrared image being labeled with a type of failure, the method comprising the steps of, for each cell:

   • Setting (202) an initial value of a photovoltaic temperature of the cell,
   • Executing several iterations of the steps of:

      - Determining (203) a photovoltaic operational power of the cell from an electro-thermal model of the cell function of the photovoltaic temperature of the cell,
      - Determining (204) a new value of the photovoltaic temperature of the cell from a heat transfer model of the cell function of the photovoltaic operational power of the cell,

   • At least a parameter of the electro-thermal model being modified (401) from a corresponding reference parameter determined for a healthy cell to simulate a type of failure,
   • Stopping (206) the iterations when a predefined convergence criteria is met,
   • Providing (207,403) an artificial infrared image composed of the photovoltaic temperature of each cells and a label corresponding to the type of failure.

2. The method for generating artificial infrared images of claim 1 wherein the at least a parameter of the electro-thermal model being modified is taken among a shunt conductance of the cell, a series resistance of the cell, an irradiance of the cell, a non-ideal factor of a diode, a resistance of a bypass diode.

3. The method for generating artificial infrared images of any of claims 1 or 2 wherein the type of failure is taken among an elevated leakage current, a high resistance in electrical contact, impurities on a solar cell, elevation of temperature, disconnection of a bypass diode.

4. The method for generating artificial infrared images of any of preceding claims wherein the stopping criteria (206) is met when the maximum absolute difference between the photovoltaic temperature at current iteration and the photovoltaic temperature at previous iteration is below a predefined threshold.

5. A computer implemented method for training a machine learning algorithm to detect a failure in a solar photovoltaic panel comprising several solar cells, the method comprising the training of the machine learning algorithm with synthetic labeled training data obtained with the method for generating artificial infrared images of any of preceding claims.

6. A computer implemented method for detecting a type of failure in a solar photovoltaic panel comprising several solar cells, the method comprising the steps of:

   • Receiving (501) an infrared image of the solar photovoltaic panel,
   • Applying (502) a machine learning algorithm, trained with the method of claim 5, to the infrared image to detect (503) a type of failure.

7. The method of claim 6 comprising measuring (501) the infrared image with a thermal imaging system.

8. A computer program product, the computer program product comprising a computer-readable storage medium having computer executable instructions embodied therewith, the computer executable instructions being executable by a processor to cause the processor to perform the steps of any of the methods of preceding claims.

FIG.1

Model parameters —— 201

Initialization
temperature

$T_{cell, 0} = T_{amb}.$ —— 202

$T_{cell, 0}$

Execute electro-
thermal model —— 203

$P_{cell,n}$

Execute heat
transfer model —— 204

$T_{cell,n}$

Max | $T_{cell,n}$ - $T_{cell,n-1}$ | < ε —— 206

No

n=n+1

yes

Output infrared image
$T_{cell,n}$ —— 207

FIG.2

$q_{conv,(k,n_s)}$ $\quad T_{cell,(k,n_s)} - T_{amb}$ $\quad T_{amb}$

$G_{conv, amb, (k,n_s)}$

$T_{cell, (k,n_s)} - T_{sky}$ $\quad T_{sky}$

$G_{rad, sky, (k,n_s)}$

$T_{cell, (k,n_s)} - q_{loss, (k,n_s)}$

$q_{rad,(k,n_s)}$ $\quad T_{cell, (k,n_s)} - T_{gro}$ $\quad T_{gro}$

$G_{rad, gro, (k,n_s)}$

$P_{sun, (k,n_s)}$ $\qquad P_{cell, (k,n_s)}$

## FIG.3

Select parameter
and value — 401

Determine type
of failure — 402

Generate labeled
infrared image — 403

## FIG.4

FIG.5

FIG.6

Europäisches
Patentamt
European
Patent Office
Office européen
des brevets

## EUROPEAN SEARCH REPORT

**Application Number**

EP 24 30 6481

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAMIREZ DAVID F ET AL: "Infrared Computer Vision for Utility-Scale Photovoltaic Array Inspection", 2024 15TH INTERNATIONAL CONFERENCE ON INFORMATION, INTELLIGENCE, SYSTEMS & APPLICATIONS (IISA), IEEE, 17 July 2024 (2024-07-17), pages 1-4, XP034779502, DOI: 10.1109/IISA62523.2024.10786613 [retrieved on 2024-12-18] * Sections I-IV; page 1 - page 4 * | 1-8 | INV. H02S50/00 |
| X | DIVYANSHI DWIVEDI ET AL: "Detection of Malfunctioning Modules in Photovoltaic Power Plants using Unsupervised Feature Clustering Segmentation Algorithm", ARXIV.ORG, CORNELL UNIVERSITY LIBRARY, 201 OLIN LIBRARY CORNELL UNIVERSITY ITHACA, NY 14853, 30 December 2022 (2022-12-30), XP091404872, * Sections I-IV; page 1 - page 6 * | 1-8 | |
| X | US 2021/360201 A1 (HU XIN [DE]) 18 November 2021 (2021-11-18) * paragraphs [0039] - [0084]; claims 1-5; figures 2-7 * | 1-8 | TECHNICAL FIELDS SEARCHED (IPC)<br><br>H02S |

The present search report has been drawn up for all claims

| Place of search | Date of completion of the search | Examiner |
|---|---|---|
| The Hague | 11 February 2025 | Boero, Mauro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 712 341 A1

## ANNEX TO THE EUROPEAN SEARCH REPORT
## ON EUROPEAN PATENT APPLICATION NO.

EP 24 30 6481

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2025

| Patent document cited in search report | Publication date | Patent family member(s) | Publication date |
|---|---|---|---|
| US 2021360201 A1 | 18-11-2021 | NONE | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. BISHOP**. Computer simulation of the effects of electrical mismatches in photovoltaic cell interconnection circuits. *Solar Cells*, October 1988, vol. 25 (1), 73-89
- **B. VAN ZEGHBROECK**. *Principles of Semiconductor Devices*, 2004
- **W. SHOCKLEY**. The theory of p-n junctions in semiconductors and p-n junction transistors. *The Bell System Technical Journal*, July 1949, vol. 28 (3), 435-489
- **D. T. LOBERA** ; **S. VALKEALAHTI**. Dynamic thermal model of solar PV systems under varying climatic conditions. *Solar Energy*, July 2013, vol. 93, 183-194
- **G. NOTTON** ; **C. CRISTOFARI** ; **M. MATTEI** ; **P. POGGI**. Modelling of a doubleglass photovoltaic module using finite differences. *Applied Thermal Engineering*, December 2005, vol. 25 (17-18), 2854-2877